(19) Europäisches Patentamt
European Patent Office
Office européen des brevets

(11) **EP 1 384 638 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(51) Int Cl.:
*B60T 17/22* (2006.01)       *F16D 66/02* (2006.01)
*B61H 5/00* (2006.01)

(21) Anmeldenummer: **03015521.2**

(22) Anmeldetag: **10.07.2003**

(54) **Vorrichtung und Verfahren zur Überwachung des Funktions- und/oder Verschleisszustandes von Bremsbelägen und/oder Bremsscheiben einer Fahrzeugbremse**

Method and device for monitoring the operational state and/or the wear of brake linings and/or brake discs of a vehicle brake

Méthode et dispositif de surveillance de l'état d'usure et/ou de fonctionnement de garnitures et/ou disques de frein d'un véhicule

(84) Benannte Vertragsstaaten:
**AT BE BG CH CY CZ DE DK EE ES FI FR GB GR HU IE IT LI LU MC NL PT RO SE SI SK TR**

(30) Priorität: **25.07.2002 DE 10233844**

(43) Veröffentlichungstag der Anmeldung:
**28.01.2004 Patentblatt 2004/05**

(73) Patentinhaber: **KNORR-BREMSE Systeme für Schienenfahrzeuge GmbH 80809 München (DE)**

(72) Erfinder: **Wagner, Thomas 82166 Gräfelfing (DE)**

(56) Entgegenhaltungen:
DE-A1- 4 212 387       DE-A1- 10 029 238
DE-A1- 19 943 352       US-A- 5 201 834
US-A- 5 848 672

**Beschreibung**

Stand der Technik

Die Erfindung geht aus von einer Vorrichtung und einem Verfahren zur Überwachung des Funktions- und/oder Verschleißzustandes von Bremsbelägen oder von Bremsbelägen und Bremsscheiben einer Fahrzeugbremse, insbesondere einer Schienenfahrzeugbremse, nach der Gattung der Patentansprüche 1 und 14.

Bei Schienenfahrzeugen wird der Verschleißzustand von Bremsbelägen und Bremsscheiben in der Regel über eine Sichtung durch Wartungspersonal geprüft oder bei Intercity-Express-Zügen durch ein optisches Verfahren kontrolliert. Dieses optische System beinhaltet mehrere, in einer Wartungshalle angeordnete Bodenkameras, über welche der Zug langsam fährt, um Aufnahmen von den Bremselementen herzustellen. Das aufgezeichnete Bildmaterial wird rechnergestützt ausgewertet und bei Bedarf die Bremsbeläge bzw. die Bremsscheiben gewechselt. Nachteilig bei diesem Verfahren ist jedoch, daß das Schienenfahrzeug die Wartungshalle aufsuchen muß und während dieser Zeit nicht einsatzfähig ist. Weiterhin ist das bekannte optische Verfahren relativ aufwendig und teuer.

Eine gattungsgemäße Vorrichtung und ein gattungsgemäßes Verfahren sind beispielsweise aus der DE 42 12 387 A1 bekannt. Ebenso beschreiben die US-A-5 848 672 und die US-A-5 201 834 Vorrichtungen und Verfahren zur Überwachung des Funktions- und/oder Verschleißzustandes von Bremsbelägen oder von Bremsbelägen und Bremsscheiben einer Fahrzeugbremse.

Der vorliegenden Erfindung liegt demgegenüber die Aufgabe zugrunde, eine Vorrichtung und ein Verfahren der eingangs erwähnten Art derart weiter zu entwickeln, daß der Verschleißzustand von Fahrzeugbremselementen noch genauer ermittelt werden kann.

Erfindungsgemäß wird diese Aufgabe durch die kennzeichnenden Merkmale der Ansprüche 1 und 14 gelöst.

Vorteile der Erfindung

Die Vorrichtung gemäß Anspruch 1 nutzt als Eingangsgrößen teilweise Größen, welche beispielsweise bei elektromechanischen Bremszuspanneinrichtungen von Schienenfahrzeugen zur Durchführung anderer Funktionen als der Bremsfunktion ohnehin sensiert werden, wie die momentane Ist-Bremskraft im Rahmen der vorhandenen Bremskraftregelung. Weitere Eingangsgrößen wie z.B. die Bremszeit oder die Relativgeschwindigkeit zwischen Bremsbelag und Bremsscheibe sind auf einfache Weise meßbar, so daß die erfindungsgemäße Vorrichtung äußerst kostengünstig realisierbar ist. Aus den Eingangsgrößen wird dann mit Hilfe des im Anspruch 1 angegebenen Verschleißmodells der aktuelle Verschleiß wenigstens eines Bremsbelages in einer für Wartungsarbeiten hinreichenden Genauigkeit berechnet. Falls der linke und der rechte Bremsbelag der einer Bremsscheibe zugeordneten Bremsbeläge einzeln überwacht wird, so ist es beispielsweise möglich, unerwünschten einseitigen Bremsbelagverschleiß zu detektieren und rechtzeitig Gegenmaßnahmen zu treffen.

Weiterhin nutzt die Vorrichtung gemäß Anspruch 1 eine vorhandene Verschleißnachstelleinrichtung wie sie beispielsweise von Schienenfahrzeugbremsen bekannt ist, um auf der Basis der Anzahl und dem jeweiligen Ausmaß der bereits erfolgten Nachstellvorgänge anhand eines Nachstellermodells den Gesamtverschleiß der Bremsbeläge und der zugeordneten Bremsscheibe zu berechnen, welcher sich aus der Summe des Verschleißes der Bremsbeläge und des Verschleißes der zugeordneten Bremsscheibe zusammensetzt, so daß beide Größen gleichzeitig erfaßt werden.

Mit der erfindungsgemäßen Vorrichtung steht somit stets Informationen über den momentanen Verschleißzustand der überwachten Bremselemente zur Verfügung, beispielsweise betreffend den Verlust oder den völligen Verschleiß eines Bremsbelages, um die Zerstörung der zugeordneten Bremsscheibe zu verhindern. Weiterhin können zeit- und kostenintensive Überprüfungen entfallen und verschlissene Bremselemente gezielt gewechselt werden. In vorteilhafter Weise können außerdem Bremsaktuatoren mit Bremsbelägen, bei welchen eine geringe Belagstärke detektiert wurde, von einer übergeordneten Steuereinheit mit weniger Bremskraft beaufschlagt werden als solche mit höherer Belagstärke, um beispielsweise die Wartungsintervalle zu verlängern.

Gegenüber einem denkbaren Meßsystem, bei welchem die Sensoren direkt an oder in den Bremsbelägen und Bremsscheiben angeordnet sind, ist die erfindungsgemäße Art der Überwachung durch Berechnungsmodelle wesentlich kostengünstiger, da am Meßobjekt direkt angebrachte Sensoren bei einem Tausch der Bremsbeläge oder Bremsscheiben verloren gehen oder zumindest neu montiert und justiert werden müssen, während das Meßsystem gemäß der vorliegenden Erfindung hiervon unberührt bleibt. Die Genauigkeit solcher Berechnungsmodelle ist im Hinblick auf Wartungsanfoderungen völlig ausreichend.

Durch die in den Unteransprüchen aufgeführten Maßnahmen sind vorteilhafte Weiterbildungen und Verbesserungen der im Patentanspruch 1 und 14 angegebenen Erfindung möglich.

Gemäß einer bevorzugten Ausführungsform der Erfindung ist wenigstens einem Bremsbelag eine Grenzverschleiß-Erfassungseinrichtung zugeordnet, mit welcher das Erreichen eines maximal zulässigen Verschleißmaßes unmittelbar detektierbar und ein vorrangiges Grenzverschleißsignal erzeugbar ist. Die Grenzverschleiß-Erfassungseinrichtung kann eine in den Bremsbelag integrierte, innerhalb eines elektrischen Kreises angeordnete Leiterschleife umfassen, welche bei Erreichen des maximal zulässigen Verschleißmaßes zur Durchtrennung mittels des gerade ablaufenden Bremsvorgangs vorgesehen ist, wobei durch die Durchtrennung das Grenzverschleißsignal erzeugt wird. Dieses Signal ist gegenüber den auf der Berechnung des Verschleißzustandes der Bremsbeläge basierenden Ausgangssignalen der Vorrichtungen gemäß Anspruch 1 vorrangig und gewährleistet als zusätzliches und übergeordnetes Sicherheitssignal stets einen rechtzeitigen Wechsel der Bremsbeläge, beispielsweise für den Fall, daß die erfindungsgemäßen Vorrichtungen ausgefallen sind. Der Fertigungs- und Montageaufwand ist bei einem solch einfachen System demgegenüber gering. Gemäß einer Weiterbildung dieser Maßnahme ist jedem Bremsbelag eine solche Grenzverschleiß-Erfassungseinrichtung zugeordnet. Dann kann der maximal zulässige Verschleiß der Bremsbeläge seitenselektiv und somit einseitiger Bremsbelagverschleiß - rechts oder links- erkannt werden.

Erfindungsgemäß ist eine Ausweerteeinrichtung vorgesehen, welche derart ausgebildet ist, daß sie abhängig von den Eingangsgrößen Verschleiß der Bremsbeläge und Gesamtverschleiß der Bremsbeläge und der Bremsscheiben als Ausgangsgrößen die aktuelle Belagstärke der Bremsbeläge und die aktuelle Dicke der Bremsscheiben bestimmt.

In bevorzugter Weiterbildung steht die Auswerteeinrichtung zusätzlich mit der Grenzverschleiß-Erfassungseinrichtung und der Temperatureinrichtung in Verbindung, so daß weitere Eingangsgrößen der Auswerteeinrichtung die Temperatur der Bremsbeläge, die Temperatur der zugeordneten Bremsscheibe, und, falls vor handen, auch das Grenzverschleißsignal sowie Randbedingungen wie Bremsbelagmaterial, Bremsscheibendurchmesser, Reibradien, Umgebungstemperaturen, Grenztemperaturen etc. sind.

In bevorzugter Weise ist die Auswerteeinrichtung dann in Abhängigkeit der Eingangsgrößen zur Plausibilitätsprüfung und bei nicht plausiblen Ergebnissen zum Erzeugen eines Fehlersignals als Ausgangsgröße ausgebildet. Die Plausibilitätsprüfung erfolgt vorzugsweise nach der Methode der kleinsten Fehlerquadrate.

In besonders zu bevorzugender Weise sind die Ausgangsgrößen der Auswerteeinrichtung in einen elektronischen Speicher einlesbar und mittels einer Anzeigeeinrichtung anzeigbar. Die Anzeigevorrichtung kann mit einem stationären Empfänger verbunden sein, welchem die Ausgangsgrößen durch einen Sender übermittelbar sind. Bevorzugt befindet sich die Anzeigeeinrichtung mit dem Empfänger in einer Wartungsstation für das Schienenfahrzeug, so daß das Wartungsteam stets über den Verschleißzustand der Bremsen der sich im Verkehr befindenden Fahrzeuge informiert ist und bedarfsweise die auszutauschenden Bremselemente bereitstellen und das betreffende Fahrzeug zur Wartung anfordern kann.

In vorteilhafter Weise ist zumindest ein Teil der elektronischen Komponenten der Grenzverschleiß-Erfassungseinrichtung, der Temperatureinrichtung, der Verschleißberechnungseinrichtungen sowie der Auswerteeinrichtung in die Steuer- und Regelelektronik eines elektromechanischen Bremsaktuators des Fahrzeugs integriert, im Sinne einer bauraumsparenden Ausführung.

Die Erfindung betrifft auch ein Verfahren zur Überwachung des Funktions- und/oder Verschleißzustandes von Bremsbelägen und Bremsscheiben einer Fahrzeugbremse gemäß Anspruch 14 sowie ein Fahrzeug gemäß Anspruch 13, insbesondere ein Schienenfahrzeug, welches mit einer erfindungsgemäßen Vorrichtung ausgestattet ist.

Zeichnungen

Ein Ausführungsbeispiel der Erfindung ist in der Zeichnung dargestellt und in der nachfolgenden Beschreibung näher erläutert. In der Zeichnung zeigt

Fig.1    eine Querschnittsdarstellung eines Bremsaktuators einer Schienenfahrzeugbremse,

Fig.2    eine schematische Funktionsdarstellung einer bevorzugten Ausführungsform einer erfindungsgemäßen Vorrichtung zur Überwachung des Funktions- und/oder Verschleißzustandes von Bremsbelägen und Bremsscheiben des Bremsaktuators.

Beschreibung des Ausführungsbeispiels

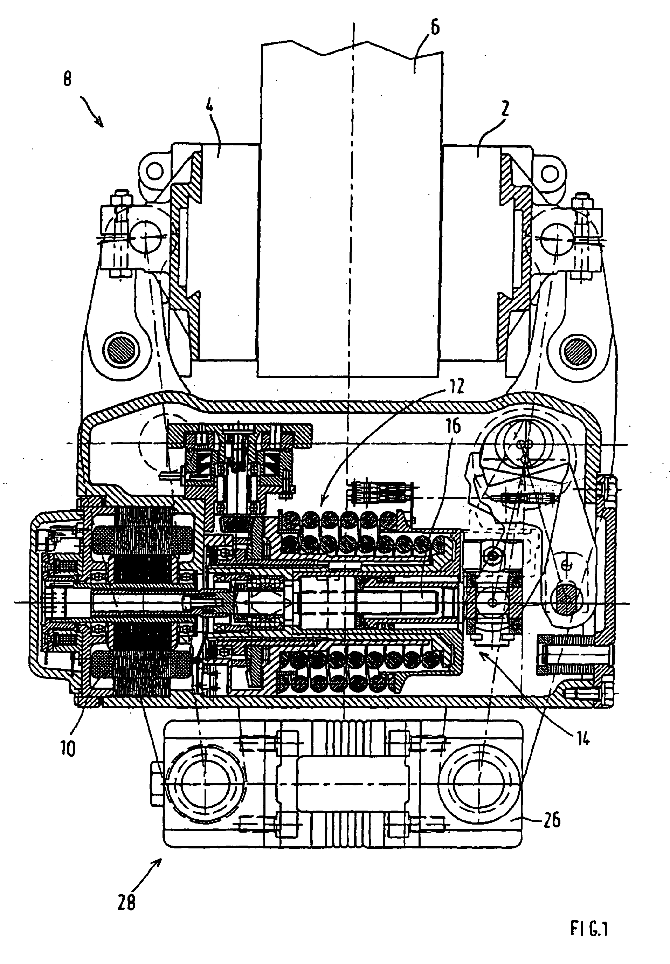

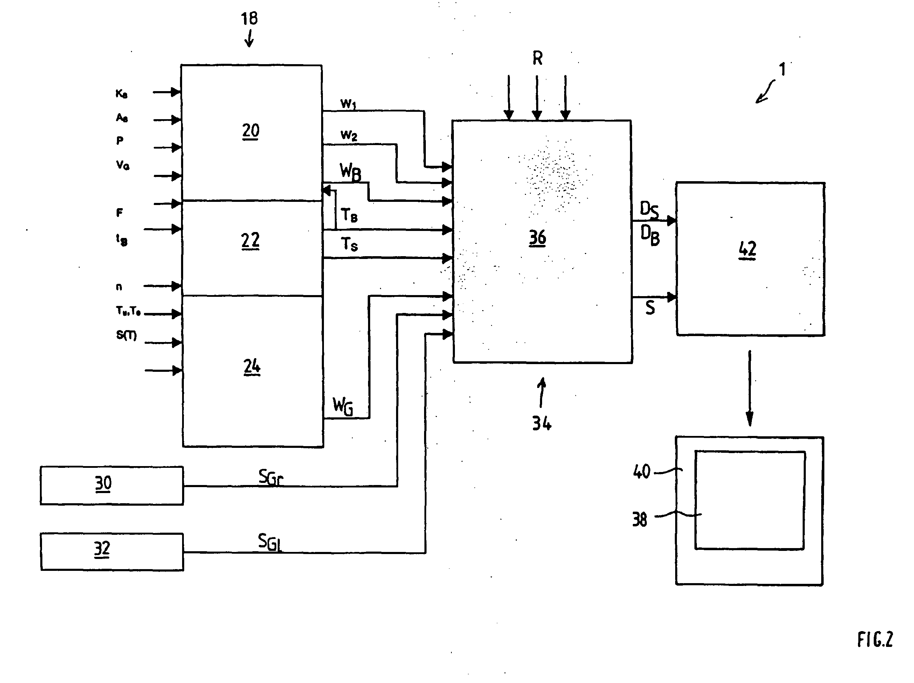

Gemäß einer bevorzugten Ausführungsform der Erfindung dient die in Fig.2 in funktionsschematischer Weise gezeigte Vorrichtung 1 zur Überwachung des Funktions- und/oder Verschleißzustandes von Bremsbelägen 2, 4 und der zugeordneten Bremsscheibe 6 eines elektromechanischen Bremsaktuators 8 einer Schienenfahrzeugbremse, wie er in Fig.1 gezeigt ist. Der Bremsaktuator 8 weist eine Betriebsbremseinheit sowie eine Speicherbremseinheit mit einem Energiespeicher auf.

Die Betriebsbremseinheit beinhaltet einen Bremskrafterzeuger zum Zuspannen und/oder Lösen der Bremse, beispielsweise in Form eines elektromotorischen Antriebs 10. Die Speicherbremseinheit umfaßt einen Energiespeicher, beispielsweise in Form eines Federspeichers 12, zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Ein Kraftumsetzer 14 sorgt für eine Umsetzung der vom Bremskrafterzeuger 10 und vom Energiespeicher 12 abgegebenen Energie in eine Bremszuspannbewegung und umfaßt beispielsweise eine vom elektromotorischen Antrieb 10 getriebene Bremsspindel 16. Die Bremszuspannbewegung ist dabei durch das Anlegen eines rechten Bremsbelages 2 und eines linken Bremsbelages 4 an die zwischen den Bremsbelägen 2, 4 an- und diesen zugeordnete Bremsscheibe 6 definiert. Der elektromotorische Antrieb 10 wird von einer aus Maßstabsgründen nicht dargestellten Steuer- und Regelelektronik angesteuert. Ein solcher Bremsaktuator 8 ist beispielsweise in der DE 199 45 702 A1 ausführlich beschrieben, deshalb soll hier nicht weiter darauf eingegangen werden.

Wie aus Fig.2 hervorgeht, beinhaltet eine erste, vertikale Funktionsebene 18 der Vorrichtung 1 eine erste Verschleißberechnungseinrichtung 20, welche mit folgenden, aus Maßstabsgründen teilweise nicht dargestellten Einrichtungen in Signalverbindung steht:

- einer Sensoreinrichtung zur Bestimmung der Gleitgeschwindigkeit $V_G$ zwischen den Bremsbelägen 2, 4 und der zugeordneten Bremsscheibe 6 während eines Bremsvorgangs,

- einer Temperatureinrichtung 22 zum berührungslosen Messen wenigstens der Temperatur $T_B$ der Reibflächen der Bremsbeläge 24 während des Bremsvorgangs,

- einer Sensoreinrichtung zur Bestimmung der Bremskraft F während des Bremsvorgangs,

- einer Zeitmeßeinrichtung zur Messung der Bremszeit $t_B$ des Bremsvorgangs,

Die erste Verschleißberechnungseinrichtung 20 ist derart ausgebildet, daß sie aus der Gleitgeschwindigkeit $V_G$, der Temperatur $T_B$, der Bremskraft F, der Bremszeit $t_B$, einer Bremsbelagfläche $A_B$, sowie aus material- und temperaturspezifischen Parametern wie einer Korrelationskonstante $K_B$ und Exponenten $\alpha$, $\beta$ und $\mu$ den Verschleiß $W_B$ wenigstens eines Bremsbelages 2, 4 nach Ablauf der Bremsdauer $t_B$ gemäß eines Verschleißmodells und nach folgender Berechnungsvorschrift ermittelt:

$$(1) \qquad W_B = K_B \, A_B \int_{t=0}^{t_B} (F/A_B)^\alpha \, V_G^\beta \, T_B^\mu \, dt.$$

Die oben genannten Eingangsgrößen sind zusammen mit anderen in Fig.2 Die oben genannten Eingangsgrößen sind zusammen mit anderen in Fig.2 linksseitig der ersten Funktionsebene 18 angetragen. Im vorliegenden Fall wird mit Hilfe der Gleichung (1) als Ausgangsgröße der ersten Verschleißberechnungseinrichtung 20 sowohl der kumulierte Verschleiß $W_B$ beider Bremsbeläge 2, 4 als auch die Ejnzelverschleißwerte $W_1$ und $W_2$ für den rechten Bremsbelag 2 und linken Bremsbelag 4 berechnet.

Die ebenfalls in der ersten Funktionsebene 18 angeordnete Temperatureinrichtung 22 zum berührungslosen Messen der Temperatur $T_B$ der Reibflächen der Bremsbeläge 2, 4 während eines Bremsvorgangs ist beispielsweise in der Schrift DE 199 43 352 A1 hinreichend beschrieben, auf deren gesamten Offenbarungsgehalt hier ausdrücklich Bezug genommen wird. Die Reibflächentemperatur $T_B$ wird dort mathematisch aus einem Temperaturmodell abgeleitet. Dieses Modell ermittelt aus den Zuspannkräften, der Zuspanndauer, den Materialpaarungen, dem Streckenprofil und anderen Größen die Temperatur $T_B$ der Reibflächen der Bremsbeläge 2, 4 als Ausgangsgröße, welche zugleich eine Eingangsgröße für das Verschleißmodell gemäß Gleichung (1) bildet. Daneben ermittelt die Temperatureinrichtung 22 auch die Bremsscheibentemperatur $T_S$. Alternativ können die Temperaturen $T_B$, $T_S$ auch mittels einer berührungslosen Sensoreinrichtung gemessen werden, beispielsweise mittels eines Strahlungspyrometers, welches die thermische Strahlung der Reibflächen mißt.

Weiterhin beinhaltet die erste Funktionsebene 18 der Vorrichtung 1 eine zweite Verschleißberechnungseinrichtung 24, welche folgende Einrichtungen beinhaltet :

- eine Verschleißnachstelleinrichtung 26 (Fig.1) zum Nachstellen des Verschleißes der Bremsbeläge 2, 4 und der Bremsscheibe 6,
- eine Einrichtung zur Erfassung von Anzahl N und dem jeweiligem Ausmaß B der erfolgten Nachstellvorgänge.

Das Ausmaß B eines Nachstellvorgangs wird beispielsweise durch die Dauer einer Betätigung eines elektrischen Nachstellermotors 28 der Verschleißnachstelleinrichtung 26 zum automatischen Nachstellen des aktuellen Bremsbelag und Bremsscheibenverschleißes gebildet. Die zweite Verschleißberechnungseinrichtung berechnet dann den kumulierten Gesamtverschleiß $W_G$ der Bremsbeläge 2, 4 und der zugeordneten Bremsscheibe 6 in Abhängigkeit von der erfaßten Anzahl N der Nachstellvorgänge und der Betätigungsdauer B des Nachstellermotors 28, vorzugsweise gemäß eines Nachstellermodells nach einer oder beiden der folgenden Berechnungsvorschriften:

$$(2) \qquad W_G = \sum_{0}^{N} S_N (B),$$

$$(3) \qquad W_G = \int_{0}^{B} S(B) \, dt,$$

wobei:

N die Anzahl der Nachstellvorgänge,
$S_N(B)$, $S(B)$ ein temperaturabhängiger korrigierter Belagverschleißweg,
B die Betätigungsdauer der Verschleißnachstelleinrichtung ist.

Als weitere Eingangsgröße für die Berechnung kann die Drehzahl n des Nachstellermotors 28 herangezogen werden, wie in Fig.2 angedeutet ist, welche beispielsweise mittels eines Drehzahlmessers detektiert wird. Darüber hinaus fungieren als weitere Eingangsgrößen der ersten Funktionsebene 18 eine obere Grenztemperatur $T_o$, welche einer maximal zulässigen Temperatur der Bremsbeläge 2, 4 bzw. der Bremsscheibe 6 entspricht, sowie eine untere Grenztemperatur $T_u$, welche einer minimal zulässigen Temperatur entspricht, unterhalb derer unbefriedigende Reibeigenschaften zwischen den Bremsbelägen 2, 4 und der Bremsscheibe 6 vorliegen. Diese Daten hängen von den gerade vorliegenden Randbedingungen ab und können demzufolge je nach Art des Bremsaktuators 8 variieren.

Weiterhin umfaßt die Vorrichtung 1 eine dem rechten Bremsbelag 2 zugeordnete Grenzverschleiß-Erfassungseinrichtung 30 und eine dem linken Bremsbelag 4 zugeordnete Grenzverschleiß-Erfassungseinrichtung 32, mit welchen jeweils das Erreichen eines maximal zulässigen Verschleißmaßes unmittelbar detektierbar und ein Grenzverschleißsignal $S_{Gr}$ für den rechten Bremsbelag 2 und getrennt davon, ein Grenzverschleißsignal $S_{Gl}$ für den linken Bremsbelag 4 erzeugbar ist. Die Grenzverschleiß-Erfassungseinrichtungen 30, 32 umfassen vorzugsweise in die Bremsbeläge 2, 4 integrierte, innerhalb von elektrischen Kreisen angeordnete Leiterschleifen, welche bei Erreichen des maximal zulässigen Verschleißmaßes zur Durchtrennung mittels des gerade ablaufenden Bremsvorgangs vorgesehen sind, wobei durch die Durchtrennung als Ausgangsgröße die Grenzverschleißsignale $S_{Gl}$ und $S_{Gr}$ erzeugt werden. Vorzugsweise wird jedem Bremsbelagpaar 2, 4 der Schienenfahrzeugbremse, welche mehrere Bremsaktuatoren 8 umfaßt, eine solche Leiterschleife zugeordnet.

Eine weitere, der ersten Funktionsebene 18 nachgeordnete zweite Funktionsebene 34 der Vorrichtung 1 beinhaltet eine mit den beiden Grenzverschleiß-Erfassungseinrichtungen 30, 32, der Temperatureinrichtung 22 und der ersten und der zweiten Verschleißberechnungseinrichtung 20, 24 in Signalverbindung stehende Auswerteeinrichtung 36.

Eingangsgrößen der Auswerteeinrichtung 36 sind zunächst der Verschleiß $W_B$ der Bremsbeläge 2, 4 und der kumulierte Gesamtverschleiß $W_G$ der Bremsbeläge 2, 4 und der Bremsscheibe 6. Abhängig von den genannten Eingangsgrößen wird mittels der Auswerteeinrichtung 36 die aktuelle Belagstärke $D_B$ der Bremsbeläge 2, 4 und die aktuelle Dicke $D_S$ der Bremsscheibe 6 durch folgende Berechnungsschritte bestimmt:

$$(4) \qquad W_S = W_G - W_B,$$

wobei

$W_G$ der Gesamtverschleiß der Bremsbeläge und der Bremsscheibe,
$W_B$ der Verschleiß der Bremsbeläge, und
$W_S$ der Verschleiß der Bremsscheibe ist.

Ausgehend von einer unverschlissenen Bremsscheibe 6 der Dicke $D_{So}$, beispielsweise $D_{So} = 40$ mm, ergibt sich für die aktuelle Dicke $D_S$ der Bremsscheibe 6 dann:

$$(5) \quad D_S = D_{S_0} - W_S.$$

In analoger Weise erhält man für die aktuelle Belagdicke $D_B$ der Bremsbeläge 2, 4 :

$$(6) \quad D_B = D_{B_0} - W_B.$$

wobei $D_{B_0}$ der Belagdicke unverschlissener Bremsbeläge 2, 4 entspricht.

Die Auswerteeinrichtung 36 ist weiterhin zur Plausibilitätsprüfung und bei nicht plausiblen Ergebnissen zum Erzeugen eines Fehlersignals S ausgebildet. Hierzu werden als weitere Eingangsgrößen folgende, im Rahmen der ersten Funktionsebene bestimmte Größen herangezogen :

Der Verschleiß $W_1$ des rechten Bremsbelages 2, der Verschleiß $W_2$ des linken Bremsbelages 4, die Temperatur $T_B$ der Bremsbeläge 2, 4, die Temperatur $T_S$ der zugeordneten Bremsscheibe 6, und, falls vorhanden, auch die Grenzverschleißsignale $S_{Gl}$ und $S_{Gr}$. Als weitere Eingangsgrößen werden in die Auswerteeinrichtung 36 spezifische Parameter R eingelesen, wie beispielsweise Bremsbelagmaterial, Bremsscheibendurchmesser, Reibradien, Umgebungstemperaturen, Grenztemperaturen etc..

Die Temperaturen $T_B$ der Bremsbeläge 2, 4 und $T_S$ der Bremsscheibe 6 einerseits und der Gesamtverschleiß $W_G$ andererseits stehen beispielsweise in proportionaler Relation zueinander, als relativ hohe Reibflächentemperaturen $T_B$ und $T_S$ auf einen relativ großen Verschleiß $W_G$ zurückzuführen sind. Bei von dieser Abhängigkeit abweichenden Ergebnissen erzeugt die in die Auswerteeinrichtung integrierte Plausibilitätskontrolle das Fehlersignal S, beispielsweise bei relativ hohem berechneten Verschleiß $W_G$ und relativ geringen Reibflächentemperaturen $T_B$ und $T_S$. Die Plausibilitätsprüfung erfolgt vorzugsweise nach der Methode der kleinsten Fehlerquadrate.

Gegenüber einer gemäß Gleichung (6) berechneten Belagdicke $W_B$ der Bremsbeläge 2, 4 ist das entsprechende unmittelbar gemessene Grenzverschleißsignal $S_{Gl}$ und $S_{Gr}$ vorrangig, welches ein zusätzliches und übergeordnetes Sicherheitssignal darstellt. Infolgedessen wird ebenfalls das Fehlersignal S erzeugt, wenn trotz Vorliegen der Grenzverschleißsignale $S_{Gl}$ und $S_{Gr}$ der berechnete Verschleißwert $W_B$ zu niedrig ist. Darüber hinaus kann ein einseitiger Bremsbelagverschleiß am Bremsaktuator 8 durch Vergleich des Verschleißes $W_1$ des rechten Bremsbelags 2 und des Verschleißes $W_2$ des linken Bremsbelags 4 detektiert werden.

Die durch die Auswerteeinrichtung 36 als Ausgangsgrößen erzeugten Werte und Signale wie die aktuelle Belagstärke $D_B$ der Bremsbeläge 2, 4 und die aktuelle Dicke $D_S$ der Bremsscheibe 6 und das eventuell erzeugte Fehlersignal S werden in einen elektronischen Speicher eingelesen und mittels einer Anzeigeeinrichtung 38 dargestellt. Dabei ist die Anzeigeeinrichtung 38 vorzugsweise mit einem stationären Empfänger 40 verbunden, welchem die Ausgangsgrößen der Auswerteeinrichtung 36 durch einen Sender 42 übermittelbar sind.

Zumindest ein Teil der elektronischen Komponenten der Grenzverschleiß-Erfassungseinrichtungen 30, 32, der Temperatureinrichtung 22, der ersten und der zweiten Verschleißberechnungseinrichtung 20, 24 sowie der Auswerteeinrichtung 36 sind in die Steuer- und Regelelektronik des elektromechanischen Bremsaktuators 8 des Schienenfahrzeugs integriert.

Bezugszeichenliste

1    Vorrichtung

2    rechter Bremsbelag

4    linker Bremsbelag

6    Bremsscheibe

8    Bremsaktuator

10    elektromotorischer Antrieb

12      Federspeicher

14      Kraftumsetzer

16      Bremsspindel

18      erste Funktionsebene

20      erste Verschleißberechnungseinrichtung

22      Temperatureinrichtung

24      zweite Verschleißberechnungseinrichtung

26      Verschleißnachstelleinrichtung

28      Nachstellermotor

30      Grenzverschleiß-Erfassungseinrichtung

32      Grenzverschleiß-Erfassungseinrichtung

34      zweite Funktionsebene

36      Auswerteeinrichtung

38      Anzeigeeinrichtung

40      Empfänger

42      Sender

**Patentansprüche**

1.  Vorrichtung zur Überwachung des Funktions- und/oder Verschleißzustandes von Bremsbelägen (2, 4) und Bremsscheiben (6) einer Fahrzeugbremse, insbesondere einer Schienenfahrzeugbremse, beinhaltend folgendes :

    - eine Verschleißnachstelleinrichtung (26) zum Nachstellen des Verschleißes der Bremsbeläge (2, 4) und der zugeordneten Bremsscheibe (6),
    - eine Einrichtung zur Erfassung von Anzahl (N) und jeweiligem Ausmaß (B) der erfolgten Nachstellvorgänge,
    - eine Verschleißberechnungseinrichtung (24) zur Berechnung des Gesamtverschleißes ($W_G$) der Bremsbeläge (2, 4) und der zugeordneten Bremsscheibe (6) in Abhängigkeit von der erfaßten Anzahl (N) und den erfaßten jeweiligen Ausmaßen (B) der Nachstellvorgänge und zur Erzeugung eines entsprechenden Verschleißsignals,

    **dadurch gekennzeichnet, dass** sie im weiteren folgendes beinhaltet :

    - eine Sensoreinrichtung zur Bestimmung der Gleitgeschwindigkeit ($V_G$) zwischen den Bremsbelägen (2, 4) und der Bremsscheibe (6) während eines Bremsvorgangs,
    - eine Temperatureinrichtung (22) zur berührungslosen Bestimmung der Temperatur ($T_B$) der Reibflächen zumindest eines Bremsbelags (2, 4) während des Bremsvorgangs,
    - eine Sensoreinrichtung zur Bestimmung der Bremskraft (F) während des Bremsvorgangs,
    - eine Zeitmesseinrichtung zur Messung der Bremszeit ($t_B$) des Bremsvorgangs,
    - eine weitere Verschleißberechnungseinrichtung (20), welche derart ausgebildet ist, dass sie aus der Gleitgeschwindigkeit $V_G$ der Temperatur $T_B$ der Bremskraft F, der Bremszeit $t_B$, einer Bremsbelagfläche $A_B$, sowie aus materialspezifischen Parametern wie einer Korrelationskonstante $K_B$ und Exponenten $\alpha$, $\beta$ $\mu$ den Verschleiß $W_B$ des wenigstens einen Bremsbelages (2, 4) nach Ablauf der Bremsdauer $t_B$ nach folgender Berechnungsvorschrift ermittelt und ein entsprechendes Verschleißsignal erzeugt:

$$W_B = K_B \, A_B \int_{t=0}^{t_B} (F/A_B)^\alpha \, V_G^\beta \, T_B^\mu \, dt$$

- eine zumindest mit den Verschleißberechnungseinrichtungen (20, 24) in Verbindung stehende Auswerteeinrichtung (36), welche derart ausgebildet ist, dass sie abhängig von den Eingangsgrößen Verschleiß ($W_B$) der Bremsbeläge (2, 4) und dem Gesamtverschleiß ($W_G$) der Bremsbeläge (2, 4) und der Bremsscheiben (6) als Ausgangsgrößen die aktuelle Belagstärke ($D_B$) der Bremsbeläge (2, 4) und die aktuelle Dicke ($D_S$) der Bremsscheibe (6) bestimmt.

2. Vorrichtung nach Anspruch 1, **dadurch gekennzeichnet, dass** die Verschleißberechnungseinrichtung (24) derart ausgebildet ist, daß sie aus der erfaßten Anzahl (N) und der erfaßten jeweiligen Betätigungsdauer (B) der Verschleißnachstelleinrichtung (26) den Gesamtverschleiß ($W_G$) der Bremsbeläge (2, 4) und der zugeordneten Bremsscheibe (6) nach einer oder beiden der folgenden Berechnungsvorschriften ermittelt:

$$(1) \quad W_G = \sum_{0}^{N} S_N (B),$$

$$(2) \quad W_G = \int_{0}^{B} S (B) \, dt,$$

wobei:

N die Anzahl der Nachstellvorgänge,
$S_N(B)$, $S(B)$ ein temperaturabhängiger korrigierter Belagverschleißweg,
B die Betätigungsdauer der Verschleißnachstelleinrichtung (26) ist.

3. Vorrichtung nach einem der vorhergehenden Ansprüche, **dadurch gekennzeichnet, dass** wenigstens einem Bremsbelag (2, 4) eine Grenzverschleiß-Erfassungseinrichtung (30, 32) zugeordnet ist, mit welcher das Erreichen eines maximal zulässigen Verschleißmaßes unmittelbar detektierbar und ein gegenüber anderen Verschleißsignalen vorrangiges Grenzverschleißsignal ($S_{Gr}$, $S_{Gl}$) erzeugbar ist.

4. Vorrichtung nach Anspruch 3, **dadurch gekennzeichnet, dass** jedem Bremsbelag (2, 4) eine Grenzverschleiß-Erfassungseinrichtung (30, 32) zugeordnet ist.

5. Vorrichtung nach Anspruch 3 oder 4, **dadurch gekennzeichnet, dass** die Grenzverschteiß-Erfassungseinrichtung (30, 32) in die Bremsbeläge (2, 4) integrierte, innerhalb von elektrischen Kreisen angeordnete Leiterschleifen umfaßt, welche bei Erreichen des maximal zulässigen Verschleißmaßes zur Durchtrennung mittels des gerade ablaufenden Bremsvorgangs vorgesehen sind, wobei durch die Durchtrennung das Grenzverschleißsignal ($S_{Gr}$, $S_{Gl}$) erzeugt wird.

6. Vorrichtung nach wenigstens einem der vorhergehenden Ansprüche, **dadurch gekennzeichnet, dass** die Temperatureinrichtung (22) zur Messung der Temperatur ($T_B$) der Bremsbeläge (2, 4) und der Temperatur ($T_S$) der zugeordneten Bremsscheibe (6) ausgebildet ist.

7. Vorrichtung nach den Ansprüchen 1 bis 6, **dadurch gekennzeichnet, dass** die Auswerteeinrichtung (36) zusätzlich mit der Grenzverschleiß-Erfassungseinrichtung (30, 32) und der Temperatureinrichtung (22) in Verbindung steht und weitere Eingangsgrößen der Auswerteeinrichtung (36) die Temperatur ($T_B$) der Bremsbeläge (2, 4), die Temperatur ($T_S$) der zugeordneten Bremsscheibe (6), der Verschleiß ($W_1$) des einen Bremsbelages (2), der Verschleiß ($W_2$) des zweiten Bremsbelages (4) und, falls vorhanden, auch das Grenzverschleißsignal ($S_{Gr}$, $S_{Gl}$) sowie Randbedingungen (R) wie Bremsbelagmaterial, Bremsscheibendurchmesser, Reibradien, Umgebungstemperaturen, Grenztemperaturen etc. sind.

8. Vorrichtung nach Anspruch 7, **dadurch gekennzeichnet, dass** die Auswerteeinrichtung (36) in Abhängigkeit der Eingangsgrößen ($T_S$, $T_B$, $W_B$, $W_G$, $W_1$, $W_2$, $S_{Gl}$, $S_{Gr}$, R) zur Plausibilitätsprüfung und bei nicht plausiblen Ergebnissen zum Erzeugen eines Fehlersignals (S) als Ausgangsgröße ausgebildet ist.

9. Vorrichtung nach Anspruch 8, **dadurch gekennzeichnet, dass** die Plausibilitätsprüfung nach der Methode der kleinsten Fehlerquadrate erfolgt.

10. Vorrichtung nach einem der Ansprüche 7 bis 9, **dadurch gekennzeichnet, dass** die Ausgangsgrößen ($D_S$, $D_B$, S) der Auswerteeinrichtung (36) in einen elektronischen Speicher einlesbar und mittels einer Anzeigeeinrichtung (38) anzeigbar sind.

11. Vorrichtung nach Anspruch 10, **dadurch gekennzeichnet, dass** die Anzeigeeinrichtung (38) mit einem stationären Empfänger (40) verbunden ist, welchem die Ausgangsgrößen ($D_S$, $D_B$, S) durch einen Sender (42) übermittelbar sind.

12. Vorrichtung nach den Ansprüchen 3 bis 11, **dadurch gekennzeichnet, dass** zumindest ein Teil der elektronischen Komponenten der Grenzverschleiß-Erfassungseinrichtung (30, 32), der Temperatureinrichtung (22), der Verschleißberechnungseinrichtungen (20, 24) sowie der Auswerteeinrichtung (36) in die Steuerelektronik eines elektromechanischen Bremsaktuators (8) des Fahrzeugs integriert sind.

13. Fahrzeug, insbesondere Schienenfahrzeug, mit einer Vorrichtung nach einem oder mehrerer der Ansprüche 1 bis 12.

14. Verfahren zur Überwachung des Funktions- und/oder Verschleißzustandes von Bremsbelägen (2, 4) und Bremsscheiben (6) einer Fahrzeugbremse, insbesondere einer Schienenfahrzeugbremse, beinhaltend folgende im Rahmen eines Nachstellmodells ablaufenden Schritte:

- Nachstellen des Verschleißes der Bremsbeläge (2, 4) und der zugeordneten Bremsscheibe (6) mittels einer Verschleißnachstelleinrichtung (26),
- Erfassen der Anzahl (N) und des jeweiligen Ausmaßes (B) der erfolgten Nachstellvorgänge,
- Berechnen des Gesamtverschleißes ($W_G$) der Bremsbeläge (2, 4) und der zugeordneten Bremsscheibe (6) in Abhängigkeit von der erfaßten Anzahl (N) und den erfaßten jeweiligen Ausmaßen (B) der Nachstellvorgänge,
- Erzeugen eines entsprechenden Verschleißsignals,

**gekennzeichnet durch** folgende weitere Schritte :

- Messen der Gleitgeschwindigkeit ($V_G$) zwischen den Bremsbelägen (2, 4) und einer zugeordneten Bremsscheibe (6) während eines Bremsvorgangs,
- Berührungsloses Bestimmen der Temperatur ($T_B$) der Reibflächen zumindest eines Bremsbelages (2, 4) während des Bremsvorgangs,
- Messen der Bremskraft (F) während des Bremsvorgangs,
- Messen der Bremszeit ($t_B$) des Bremsvorgangs,
- Berechnen des Verschleißes $W_B$ des wenigstens einen Bremsbelages (2, 4) nach der Bremsdauer $t_B$ abhängig von den gemessenen Größen Gleitgeschwindigkeit $V_G$, Temperatur $T_B$, Bremskraft F, sowie von einer Bremsbelag- oder einer Bremsscheibenfläche $A_B$ und von materialspezifischen Parametern wie einer Korrelationskonstante $K_B$ und Exponenten $\alpha$, $\beta$, $\mu$ gemäß folgendem Verschleißmodell :

$$W_B = K_B\, A_B \int_{t=0}^{t_B} (F/A_B)^{\alpha}\, V_G^{\beta}\, T_B^{\mu}\, dt$$

- Erzeugen eines entsprechenden Verschleißsignals, wobei
- abhängig von den Eingangsgrößen Verschleiß ($W_B$) der Bremsbeläge (2, 4) und Gesamtverschleiß ($W_G$) der Bremsbeläge (2, 4) und der zugeordneten Bremsscheibe (6) mittels einer Auswerteeinrichtung (36) als Ausgangsgrößen die aktuelle Belagstärke ($D_B$) der Bremsbeläge (2, 4) und die aktuelle Dicke ($D_S$) der zugeordneten Bremsscheibe (6) bestimmt wird.

**15.** Verfahren nach Anspruch 14, **dadurch gekennzeichnet, dass** der Gesamtverschleiß ($W_G$) der Bremsbeläge (2, 4) und der zugeordneten Bremsscheibe (6) aus der erfaßten Anzahl (N) der Nachstellvorgänge und der erfaßten jeweiligen Betätigungsdauer (B) der Verschleißnachstelleinrichtung (26) nach einer oder beiden der folgenden Berechnungsvorschriften ermittelt wird :

$$(1) \qquad W = \sum_{0}^{N} S_N (B),$$

$$(2) \qquad W = \int_{0}^{B} S (B) \, dt,$$

wobei:

N die Anzahl der Nachstellvorgänge,
$S_N(B)$, $S(B)$ ein temperaturabhängiger korrigierter Belagverschleißweg,
B die Betätigungsdauer der Verschleißnachstelleinrichtung ist.

**16.** Verfahren nach einem der Ansprüche 14 oder 15, **dadurch gekennzeichnet, dass** das Erreichen eines maximal zulässigen Verschleißmaßes wenigstens eines Bremsbelages (2, 4) unmittelbar detektiert und ein gegenüber anderen Verschleißsignalen vorrangiges Grenzverschleißsignal ($S_{Gr}$, $S_{Gl}$) erzeugt wird.

**17.** Verfahren nach Anspruch 16, **dadurch gekennzeichnet, dass** in die Bremsbeläge (2, 4) integrierte, innerhalb von elektrischen Kreisen angeordnete Leiterschleifen vorgesehen sind, welche bei Erreichen des maximal zulässigen Verschleißmaßes mittels des aktuell ablaufenden Bremsvorgangs durchtrennt werden, wobei durch die Durchtrennung das Grenzverschleißsignal ($S_{Gr}$, $S_{Gl}$) erzeugt wird.

**18.** Verfahren nach Anspruch 17, **dadurch gekennzeichnet, dass** für jeden Bremsbelag ein eigenes Grenzverschleißsignal ($S_{Gr}$, $S_{Gl}$) erzeugt wird.

**19.** Verfahren nach Anspruch 18, **dadurch gekennzeichnet, dass** die Temperatur ($T_B$) der Bremsbeläge (2, 4) und die Temperatur ($T_S$) der zugeordneten Bremsscheibe (6) gemessen wird.

**20.** Verfahren nach einem der Ansprüche 14 bis 19, **dadurch gekennzeichnet, dass** als weitere Eingangsgrößen der Auswerteeinrichtung (36) die Temperatur ($T_B$) der Bremsbeläge (2, 4), die Temperatur ($T_S$) der zugeordneten Bremsscheibe (6), der Verschleiß ($W_1$) des einen Bremsbelages (2), der Verschleiß ($W_2$) des zweiten Bremsbelages (4) und, falls vorhanden, auch das Grenzverschleißsignal ($S_{Gr}$, $S_{Gl}$) sowie Randbedingungen (R) wie Bremsbelagmaterial, Bremsscheibendurchmesser, Reibradien, Umgebungstemperaturen, Grenztemperaturen etc. herangezogen werden.

**21.** Verfahren nach Anspruch 20, **dadurch gekennzeichnet, dass** in Abhängigkeit der Eingangsgrößen ($T_S$, $T_B$, $W_B$, $W_G$, $W_1$, $W_2$, $S_{Gl}$, $S_{Gr}$, R) der Auswerteeinrichtung (36) zusätzlich eine Plausibilitätsprüfung durchgeführt und bei nicht plausiblen Ergebnissen ein Fehlersignal (S) erzeugt wird.

**22.** Verfahren nach Anspruch 21, **dadurch gekennzeichnet, dass** die Plausibilitätsprüfung nach der Methode der kleinsten Fehlerquadrate erfolgt.

**23.** Verfahren nach einem der Ansprüche 14 bis 22, **dadurch gekennzeichnet, dass** die Ausgangsgrößen ($D_B$, $D_S$, S) der Auswerteeinrichtung (36) in einen elektronischen Speicher eingelesen und mittels einer Anzeigeeinrichtung (38) angezeigt werden.

**24.** Verfahren nach Anspruch 23, **dadurch gekennzeichnet, dass** die Ausgangsgrößen ($D_B$, $D_S$, S) der Auswerteeinrichtung (36) durch einen Sender (42) an einen stationären Empfänger (40) übermittelt werden.

**Claims**

1. Device for monitoring the functional state and/or the wear condition of brake linings (2, 4) and brake discs (6) of a vehicle brake system, in particular a rail vehicle brake system, including the following:

   - a wear readjustment means (26) for readjustment of the wear on said brake linings (2, 4) and the associated brake disc (6),
   - a means for detecting the number (N) and the respective scope (B) of the readjustment operations performed,
   - a wear-calculating means (24) for calculating the total wear ($W_G$) on said brake linings (2, 4) and the associated brake disc (6) as a function of the detected number (N) and the detected respective scopes (B) of the readjustment operations and for generating a corresponding wear signal,

   **characterised in that** it includes moreover the following:

   - a sensor means for determining the sliding rate ($V_G$) between said brake linings (2, 4) and said brake disc (6) during a braking operation,
   - a temperature means (22) for non-contacting detection of the temperature ($T_B$) of the frictional areas of at least one brake lining (2, 4) during the braking operation,
   - a sensor means for detecting the braking force (F) during the braking operation,
   - a time-measuring means for measuring the braking period ($t_B$) of the braking operation,
   - a further wear-calculation means (20) which is so configured that it determines the wear ($W_B$) on said at least one brake lining (2, 4) from the sliding rate $V_G$, the temperature $T_B$, the braking force F, the braking period $t_B$ of a brake lining area $A_B$ as well as from material-specific parameters such as a correlation constant $K_B$ and exponents $\alpha$, $\beta$, $\mu$ after expiration of the braking period $t_B$ in accordance with the following rule of calculation and generates a corresponding wear signal:

   $$W_B = K_B \, A_B \int_{t=0}^{t_B} (F/A_B)^\alpha \, V_G^\beta \, T_B^\mu \, dt$$

   - a analyser means (36) in communication with at least said wear-calculating means (20, 24) which is so configured that it determines the current lining thickness ($D_B$) of said brake linings (2, 4) and the current thickness ($D_S$) of said brake disc (6) as a function of the input values wear ($W_B$) of said brake linings (2, 4) and the total wear ($W_G$) on said brake linings (2, 4) and said brake discs (6) as output values.

2. Device according to Claim 1, **characterised in that** said wear-calculating means (24) is so configured that it establishes the total wear (WG) on said brake linings (2, 4) and the associated brake disc (6) from the detected number (N) and the detected respective period of operation (B) of said wear readjustment means (26) in accordance with one or both of the following rules of calculation:

   $$(1) \quad W_G = \sum_{0}^{N} S_N (B)$$

   $$(2) \quad W_G = \int_{0}^{B} S (B) \, dt,$$

   wherein:

   N is the number of the readjustment operations,
   $S_N(B)$, $S(B)$ represents a corrected lining wear distance as a function of temperature,

B indicates the period of operation of the wear readjustment means (26).

3. Device according to any of the preceding Claims, **characterised in that** a limit wear detecting means (30, 32) is associated with at least one brake lining (2, 4) which is adapted to detect directly the reaching of a maximum wear extent permissible and to generate a limit wear signal ($S_{Gr}$, $S_{Gl}$) having priority over other wear signals.

4. Device according to Claim 3, **characterised in that** a limit wear detection means (30, 32) is associated with each brake lining (2, 4).

5. Device according to Claim 3 or 4, **characterised in that** said limit wear detecting means (30, 32) comprises conductor loops integrated into said brake linings (2, 4) and disposed within electric circuits, which loops are provided for dissection by means of the current brake operation when said maximum wear extent permissible is reached, with said limit wear signal ($S_{Gr}$, $S_{Gl}$) being generated on account of the dissection.

6. Device according to at least one of the preceding Claims, **characterised in that** said temperature means (22) is designed for measuring the temperature ($T_B$) of said brake linings (2, 4) and the temperature ($T_S$) of the associated brake disc (6).

7. Device according to the Claims 1 to 6, **characterised in that** said analyser means (36) is additionally in communication with said limit wear detection means (30, 32) and said temperature means (22) and that further input parameters of said analyser means (36) are the temperature ($T_B$) of said brake linings (2, 4), the temperature ($T_S$) of the associated brake disc (6), the wear ($W_1$) on the first brake lining (2), the wear ($W_2$) on said second brake lining (4) and, if available, also the limit wear signal ($S_{Gr}$, $S_{Gl}$) as well as marginal conditions (R) such as the brake lining material, the brake disc diameter, the friction radii, ambient temperatures, limit temperatures, etc.

8. Device according to Claim 7, **characterised in that** said analyser means (36) is designed for a plausibility check as a function of the input values ($T_S$, $T_B$, $W_B$, $W_G$, $W_1$, $W_2$, $S_{Gl}$, $S_{Gr}$, R) and for generating an error signal (S) as output value in the case of non-plausible results.

9. Device according to Claim 8, **characterised in that** the plausibility check is performed in accordance with the method of the least error squares.

10. Device according to any of the Claims 7 to 9, **characterised in that** the output values ($D_S$, $D_B$, S) of said analyser means (36) are provided for being read into an electronic memory and for being displayed by means of a display means (38).

11. Device according to Claim 10, **characterised in that** said display means (38) is connected to a stationary receiver (40) to which said output values ($D_S$, $D_B$, S) can be transmitted by means of a transmitter (42).

12. Device according to the Claims 3 to 11, **characterised in that** at least one part of the electronic components of said limit wear detection means (30, 32), said temperature means (22), said wear-calculating means (20, 24) as well as of said analyser means (36) is integrated into the electronic control system of an electro-mechanical brake actuator (8) of the vehicle.

13. Vehicle, in particular a rail vehicle, comprising a device according to any or several of the Claims 1 to 12.

14. Method of monitoring the functional state and/or the wear condition of brake linings (2, 4) and brake discs (6) of a vehicle brake system, in particular a rail vehicle brake system, including the following steps within the general framework of a readjustment model:

- readjustment of the wear on said brake linings (2, 4) and the associated brake disc (6) by means of a wear readjustment means (26)"
- detection of the number (N) and the respective scope (B) of the readjustment operations performed,
- calculation of the total wear ($W_G$) on said brake linings (2, 4) and the associated brake disc (6) as a function of the detected number (N) and the detected respective scopes (B) of the readjustment operations,
- generation of a corresponding wear signal,

**characterised by** the following further steps:

- measuring the sliding rate ($V_G$) between said brake linings (2, 4) and said brake disc (6) during a braking operation,
- non-contacting detection of the temperature ($T_B$) of the frictional areas of at least one brake lining (2, 4) during the braking operation,
- measuring the braking force (F) during the braking operation,
- measuring the braking period ($t_B$) of the braking operation,
- calculation of the wear ($W_B$) on said at least one brake lining (2, 4) after the braking period $t_B$ as a function of the measured parameters sliding rate $V_G$, the temperature $T_B$, the braking force F as well as a brake lining area or a brake disc area $A_B$ and material-specific parameters such as a correlation constant $K_B$ and exponents $\alpha$, $\beta$, $\mu$ in compliance with the following wear model:

$$W_B = K_B \, A_B \int_{t=0}^{t_B} (F/A_B)^\alpha \, V_G{}^\beta \, T_B{}^\mu \, dt$$

- generation of a corresponding wear signal, wherein
- as a function of the input values wear ($W_B$) of said brake linings (2, 4) and the total wear ($W_G$) on said brake linings (2, 4) and the associated brake disc (6), the current lining thickness ($D_B$) of said brake linings (2, 4) and the current thickness ($D_S$) of said brake disc (6) are determined as output values by means of an analyser means (36).

15. Method according to Claim 14, **characterised in that** the total wear (WG) on said brake linings (2, 4) and the associated brake disc (6) is determined from the detected number (N) of readjustment operations and the detected respective period of operation (B) of said wear readjustment means (26) in accordance with one or both of the following rules of calculation:

$$(1) \quad W_G = \sum_{0}^{N} S_N \, (B)$$

$$(2) \quad W_G = \int_{0}^{B} S \, (B) \, dt,$$

wherein:

N is the number of the readjustment operations,
$S_N(B)$, $S(B)$ represents a corrected lining wear distance as a function of temperature,
B indicates the period of operation of the wear readjustment means (26).

16. Method according to any of the Claims 14 or 15, **characterised in that** the fact that a maximum wear extent permissible on at least one brake lining (2, 4) is reached is detected directly and that a limit wear signal ($S_{Gr}$, $S_{Gl}$) is generated which has priority over other wear signals.

17. Method according to Claim 16, **characterised in that** conductor loops integrated into said brake linings (2, 4) and disposed within electric circuits are provided, which loops are dissected by means of the current brake operation when said maximum wear extent permissible is reached, with said limit wear signal ($S_{Gr}$, $S_{Gl}$) being generated on account of the dissection.

18. Method according to Claim 17, **characterised in that** a separate limit wear signal ($S_{Gr}$, $S_{Gl}$) is generated for each brake lining.

19. Method according to Claim 18, **characterised in that** the temperature ($T_B$) of said brake linings (2, 4) and the temperature ($T_S$) of the associated brake disc (6) are measured.

**20.** Method according to any of the Claims 14 to 19, **characterised in that** the temperature ($T_B$) of said brake linings (2, 4), the temperature ($T_S$) of the associated brake disc (6), the wear ($W_1$) on the first brake lining (2), the wear ($W_2$) on said second brake lining (4) and, if available, also the limit wear signal ($S_{Gr}$, $S_{Gl}$) as well as marginal conditions (R) such as the brake lining material, the brake disc diameter, the friction radii, ambient temperatures, limit temperatures, etc. are used as further input values.

**21.** Method according to Claim 20, **characterised in that** an additional plausibility check is performed as a function of the input values ($T_S$, $T_B$, $W_B$, $W_G$, $W_1$, $W_2$, $S_{Gl}$, $S_{Gr}$, R) and that an error signal (S) is generated as output value in the case of non-plausible results.

**22.** Method according to Claim 21, **characterised in that** the plausibility check is performed in accordance with the method of the least error squares.

**23.** Method according to any of the Claims 14 to 22, **characterised in that** the output values ($D_S$, $D_B$, S) of said analyser means (36) are read into an electronic memory and are displayed by means of a display means (38).

**24.** Method according to Claim 23, **characterised in that** said output values ($D_B$, $D_S$, S) of said analyser means (36) are transmitted by means of a transmitter (42) to a stationary receiver (40).

**Revendications**

**1.** Dispositif de monitorage de l'état fonctionnel et/ou de l'état d'usure des garnitures de frein (2, 4) et des disques de frein (6) d'un système de freinage d'un véhicule, en particulier d'un système de freinage à un véhicule sur rails, comprenant les moyens suivants :

- un moyen de rattrapage d'usure (26) pour le rattrapage de l'usure auxdites garnitures de frein (2, 4) et au disque de frein y affecté (6),
- un moyen à détecter le nombre (N) et l'importance respective (B) des opérations de rattrapage réalisées,
- un moyen de calcul de l'usure (24) à calculer l'usure totale ($W_G$) auxdites garnitures de frein (2, 4) et audit disque de frein y affecté (6) en fonction du nombre détecté (N) et des importances détectées respectives (B) des opérations de rattrapage et à engendrer un signal de l'usure correspondant,

**caractérisé en ce qu'**il comprend au plus les éléments suivants :

- un moyen détecteur à établir la vitesse de glissement ($V_G$) entre lesdites garnitures de frein (2, 4) et ledit disque de frein (6) au cours d'un cycle de serrage de frein,
- un moyen détecteur de température (22) pour la détection sans contact de la température ($T_B$) des aires de friction d'au moins une garniture de frein (2, 4) au cours du cycle de serrage de frein,
- un moyen détecteur à détecter l'effort de freinage (F) au cours du cycle de serrage de frein,
- un moyen chronomètre à mesurer l'intervalle de freinage ($t_B$) de l'opération de serrage du frein,
- un moyen de calcul de l'usure supplémentaire (20) qui est configuré d'une telle façon, qu'il établisse l'usure ($W_B$) à ladite au moins une garniture de frein (2, 4) de la vitesse de glissement $V_G$, de la température $T_B$, de l'effort de freinage F, de l'intervalle de freinage $t_B$ d'une aire sur la garniture de frein $A_B$ ainsi que des paramètres spécifiques du matériau comme, par exemple, une constante de corrélation $K_B$ et des exposants $\alpha$, $\beta$, $\mu$ après l'expiration de l'intervalle de freinage $t_B$ selon la règle de calcul suivante et engendre un signal de l'usure correspondant:

$$W_B = K_B \, A_B \int_{t=0}^{t_B} (F/A_B)^{\alpha} \, V_G^{\beta} \, T_B^{\mu} \, dt$$

- un moyen d'évaluation (36) en communication avec au moins ledit moyen de calcul de l'usure (20, 24), qui est configuré d'une telle façon, qu'il établisse l'épaisseur actuelle de la garniture ($D_B$) desdites garniture de frein (2, 4) et l'épaisseur actuelle ($D_S$) dudit disque de frein (6) en fonction des valeurs d'entrée usure ($W_B$) desdites garniture de frein (2, 4) et l'usure totale ($W_G$) auxdites garnitures de frein (2, 4) et ledit disque de freins (6) en tant que valeurs de sortie.

**2.** Dispositif selon la revendication 1, **caractérisé en ce que** ledit moyen de calcul de l'usure (24) est configuré d'une telle façon, qu'il établisse l'usure totale (WG) auxdites garnitures de frein (2, 4) et au disque de frein y affecté (6) à partir du nombre détecté (N) et la période d'opération détectée respective (B) dudit moyen de rattrapage d'usure (26) en correspondance avec une ou les deux règles de calcul prescrites :

$$(1) \quad W_G = \sum_{0}^{N} S_N (B)$$

$$(2) \quad W_G = \int_{0}^{B} S (B) \, dt,$$

dans laquelle:

N est le nombre des opérations de rattrapage,
$S_N(B)$, $S(B)$ représente une distance d'usure de garniture corrigée en fonction de la température,
B indique la période d'opération du moyen de rattrapage d'usure (26).

**3.** Dispositif selon une quelconque des revendications précédentes, **caractérisé en ce qu'**un moyen détecteur de l'usure limite (30, 32) est affecté à au moins une garniture de frein (2, 4), qui est apte à détecter directement l'état, où une importance maximale de l'usure permise est atteinte, et à engendrer un signal de l'usure limite ($S_{Gr}$, $S_{Gl}$) prioritaire relativement aux autres signaux de l'usure.

**4.** Dispositif selon la revendication 3, **caractérisé en ce qu'**un moyen détecteur de l'usure limite (30, 32) est affecté à chaque garniture de frein (2, 4).

**5.** Dispositif selon la revendication 3 ou 4, **caractérisé en ce que** ledit moyen détecteur de l'usure limite (30, 32) comprend des boucles à conducteurs intégrées dans lesdits garnitures de frein (2, 4) et disposées dans des circuits électriques, lesquelles boucles sont disposées à être sectionné moyennant l'opération actuelle de serrage de frein, quand ladite importance maximale de l'usure permise est atteinte, audit signal de l'usure limite ($S_{Gr}$, $S_{Gl}$) étant engendré en vertu du sectionnement.

**6.** Dispositif selon au moins une quelconque des revendications précédentes, **caractérisé en ce que** ledit moyen détecteur de température (22) est conçu pour la mesure de la température ($T_B$) desdites garnitures de frein (2, 4) et de la température ($T_S$) du disque de frein y affecté (6).

**7.** Dispositif selon les revendications 1 à 6, **caractérisé en ce que** ledit moyen d'évaluation (36) se trouve au plus en communication avec ledit moyen détecteur de l'usure limite (30, 32) et ledit moyen détecteur de température (22), et **en ce que** des autres paramètres d'entrée dudit moyen d'évaluation (36) sont : la température ($T_B$) desdites garnitures de frein (2, 4), la température ($T_S$) du disque de frein y affecté (6), l'usure ($W_1$) à la première garniture de frein (2), l'usure ($W_2$) à la deuxième garniture de frein (4) et, si disponible, aussi le signal de l'usure limite ($S_{Gr}$, $S_{Gl}$) ainsi que les conditions marginales (R) comme, par exemple, le matériau de la garniture de frein, le diamètre du disque de frein, les rayons de friction, les températures ambiantes, les températures limites, etc.

**8.** Dispositif selon la revendication 7, **caractérisé en ce que** ledit moyen d'évaluation (36) est conçu pour un contrôle de vraisemblance en fonction des valeurs d'entrée ($T_S$, $T_B$, $W_B$, $W_G$, $W_1$, $W_2$, $S_{Gl}$, $S_{Gr}$, R) et pour la génération d'un signal d'erreur (S) en tant que valeur de sortie au cas des résultats de non-vraisemblance.

**9.** Dispositif selon la revendication 8, **caractérisé en ce que** le contrôle de vraisemblance est réalisé en correspondance avec la méthode de moindres carrés d'erreur.

**10.** Dispositif selon une quelconque des revendications 7 à 9, **caractérisé en ce que** les valeurs de sortie ($D_S$, $D_B$, S) dudit moyen d'évaluation (36) sont envisagées à être lu dans un mémoire électronique et pour la visualisation sur un moyen d'affichage (38).

**11.** Dispositif selon la revendication 10, **caractérisé en ce que** ledit moyen d'affichage (38) est raccordé à un récepteur stationnaire (40), auquel on peut transmettre lesdites valeurs de sortie ($D_S$, $D_B$, S) moyennant un émetteur (42).

**12.** Dispositif selon les revendications 3 à 11, **caractérisé en ce qu'**au moins une partie des composants électroniques dudit moyen détecteur de l'usure limite (30, 32), dudit moyen détecteur de température (22), dudit moyen de calcul de l'usure (20, 24) ainsi que dudit moyen d'évaluation (36) est intégrée dans le système électronique de commande d'un acteur de frein électromécanique (8) du véhicule.

**13.** Véhicule, en particulier un véhicule sur rails, comprenant un dispositif selon une quelconque des revendications 1 à 12.

**14.** Procédé à surveiller l'état fonctionnel et/ou l'état d'usure des garnitures de frein (2, 4) et des disques de frein (6) d'un système de freinage d'un véhicule, en particulier d'un système de freinage à un véhicule sur rails, renfermant les étapes suivants au-dedans le cadre général d'un modèle de rattrapage :

- rattrapage de l'usure auxdites garnitures de frein (2, 4) et au disque de frein y affecté (6) à l'aide d'un moyen de rattrapage d'usure (26),
- détection du nombre (N) et de l'importance respective (B) des opérations de rattrapage réalisées,
- calcul de l'usure totale ($W_G$) auxdites garnitures de frein (2, 4) et au disque de frein y affecté (6) en fonction du nombre détecté (N) et des importances détectées respectives (B) des opérations de rattrapage,
- génération d'un signal de l'usure correspondant,

**caractérisé par** les étapes supplémentaires suivantes :

- mesure de la vitesse de glissement ($V_G$) entre lesdites garnitures de frein (2, 4) et ledit disque de frein (6) au cours d'un cycle de serrage de frein,
- détection sans contact de la température ($T_B$) des aires de friction d'au moins une garniture de frein (2, 4) au cours du cycle de serrage de frein,
- mesure de l'effort de freinage (F) au cours du cycle de serrage de frein,
- mesure de l'intervalle de freinage ($t_B$) de l'opération de serrage du frein,
- calcul de l'usure ($W_B$) à au moins une garniture de frein (2, 4) après l'intervalle de freinage $t_B$ en fonction des paramètres mesurés « vitesse de glissement $V_G$ », « température $T_B$, l'effort de freinage F » ainsi qu'une aire de garniture de frein ou une aire du disque de frein $A_B$ et des paramètres spécifiques du matériau, comme, par exemple, une constante de corrélation $K_B$ et des exposants $\alpha$, $\beta$, $\mu$ en correspondance avec le modèle d'usure suivant :

$$W_B = K_B \, A_B \int_{t=0}^{t_B} (F/A_B)^\alpha \, V_G^\beta \, T_B^\mu \, dt$$

- génération d'un signal de l'usure correspondant, dans lequel
- en fonction des valeurs d'entrée « usure ($W_B$) desdites garniture de frein (2, 4) » et « usure totale ($W_G$) auxdites garnitures de frein (2, 4) et au disque de frein y affecté (6) », établissement de l'épaisseur actuelle de la garniture ($D_B$) desdites garniture de frein (2, 4) et de l'épaisseur actuelle ($D_S$) dudit disque de frein (6) en tant que valeurs de sortie à l'aide d'un moyen d'évaluation (36).

**15.** Procédé selon la revendication 14, **caractérisé en ce que** l'usure totale (WG) auxdites garnitures de frein (2, 4) et au disque de frein y affecté (6) est établie à partir du nombre détecté (N) des opérations de rattrapage et la période respective détectée de l'opération (B) dudit moyen de rattrapage d'usure (26) en corresondance avec une ou les deux règles de calcul prescrites :

$$(1) \quad W_G = \sum_{0}^{N} S_N (B)$$

$$(2) \quad W_G = {}_0\!\int^B S\,(B)\,dt,$$

dans laquelle:

N est le nombre des opérations de rattrapage,
$S_N(B)$, $S(B)$ représente une distance d'usure de garniture corrigée en fonction de la température,
B indique la période d'opération du moyen de rattrapage d'usure (26).

**16.** Procédé selon une quelconque des revendications 14 ou 15, **caractérisé en ce que** la situation, qu'une importance maximale de l'usure permise est atteinte à au moins une garniture de frein (2, 4), est détectée directement et **en ce qu'**un signal de l'usure limite ($S_{Gr}$, $S_{Gl}$) est engendré, qui est prioritaire relativement aux autres signaux d'usure.

**17.** Procédé selon la revendication 16, **caractérisé en ce que** des boucles à conducteurs intégrées dans lesdits garnitures de frein (2, 4) et disposées dans des circuits électriques sont formées, qui sont sectionnées moyennant l'opération de freinage actuelle, quand ladite importance maximale de l'usure permise est atteint, audit signal de l'usure limite ($S_{Gr}$, $S_{Gl}$) étant engendré en vertu du sectionnement.

**18.** Procédé selon la revendication 17, **caractérisé en ce qu'**un signal particulier de l'usure limite ($S_{Gr}$, $S_{Gl}$) est engendré pour chaque garniture de frein.

**19.** Procédé selon la revendication 18, **caractérisé en ce qu'**on fait la mesure de la température ($T_B$) desdites garniture de frein (2, 4) et de la température ($T_S$) du disque de frein y affecté (6).

**20.** Procédé selon une quelconque des revendications 14 à 19, **caractérisé en ce que** la température ($T_B$) desdites garniture de frein (2, 4), la température ($T_S$) du disque de frein y affecté (6), l'usure ($W_1$) à une première garniture de frein (2), l'usure ($W_2$) à ladite deuxième garniture de frein (4) et, si disponible, aussi le signal de l'usure limite ($S_{Gr}$, $S_{Gl}$) ainsi que des conditions marginales (R) comme, par exemple, le matériau de la garniture de frein, le diamètre du disque de frein, les rayons de friction, des températures ambiantes, des températures limites, etc. sont utilisés en tant que des valeurs supplémentaires d'entrée.

**21.** Procédé selon la revendication 20, **caractérisé en ce qu'**un contrôle de vraisemblance supplémentaire est réalisé en fonction des valeurs d'entrée ($T_S$, $T_B$, $W_B$, $W_G$, $W_1$, $W_2$, $S_{Gl}$, $S_{Gr}$, R) et **en ce qu'**un signal d'erreur (S) est engendré en tant que valeur de sortie au cas des résultats de non-vraisemblance.

**22.** Procédé selon la revendication 21, **caractérisé en ce que** le contrôle de vraisemblance est réalisé en correspondance avec la méthode des moindres carrés d'erreur.

**23.** Procédé selon une quelconque des revendications 14 à 22, **caractérisé en ce qu'**on lit les valeurs de sortie ($D_S$, $D_B$, S) dudit moyen d'évaluation (36) dans un mémoire électronique et les visualise sur un moyen d'affichage (38).

**24.** Procédé selon la revendication 23, **caractérisé en ce qu'**on transmet lesdites valeurs de sortie ($D_B$, $D_S$, S) dudit moyen d'évaluation (36) à l'aide d'un émetteur (42) vers un récepteur stationnaire (40).

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4212387 A1
- US 5848672 A
- US 5201834 A
- DE 19945702 A1
- DE 19943352 A1